# EUROPEAN PATENT SPECIFICATION

(11) **EP 3 599 874 B1**
(45) Date of publication and mention of the grant of the patent: **10.03.2021**
(21) Application number: 17722898.8
(22) Date of filing: 21.03.2017
(51) Int. Cl.: A22C 21/00, A22B 5/00

(54) **DEVICE FOR CLEANING CHICKEN FEET**
VORRICHTUNG ZUR REINIGUNG VON GEFLÜGELFÜSSEN
DISPOSITIF DE NETTOYAGE DE PATTES DE VOLAILLE

(43) Date of publication of application: 05.02.2020
(73) Proprietor: SMS Food Industries Poland SP. Z.O.O., 83-200 Starogard Gdanski (PL)
(72) Inventor: ABAY, Mehmet Emin, 83-200 Starogard Gdanski (PL)
(74) Representative: Czabajski, Jacek
(86) International application number: PCT/PL2017/000026
(87) International publication number: WO 2018/174731

(56) References cited:
- CN-A- 102 837 849
- CN-U- 203 040 560
- CN-U- 203 152 386
- US-B1- 6 283 848
- US-B2- 8 827 775

## Description

The invention relates to a device for removing impurities in the form of burnt tissue and dried blood from chicken feet. The chicken foot has four toes together with the metatarsal bones and the talus. Apart from the bones, chicken feet contain cartilage, small amounts of muscles, tendons and skin. In a number of countries chicken feet are a valued delicacy.

Cleaning operations in the poultry industry are a problem, mainly because products from this branch of the food industry are perishable. In the solution known from the specification of Chinese utility model No. CN 204217760, a device for feeding poultry in a slaughterhouse and clean chicken feather removal is disclosed. The device is used for feeding a chicken body and contains a box with a body and a cover. The body and the cover are matched to each other, with the upper half of the body part being provided with a rotating shaft. Bearings are arranged near the outer side wall of the body, on both sides of the rotating shaft. However, bearing blocks are arranged on the outside of the bearing. The body shaft is provided with a shaft connected to the right rear end of the spindle. The alcohol container is located in the bottom part of the body. However, above the insulation plate, the alcohol tray is arranged. The body comprises a sliding key. The swivel base is arranged in the bottom part of the body housing. The bottom plate is arranged below the box body. The meshing posts are located at the edge of the bottom plate. The chicken feed trough is attached to the side wall of the body housing. However, the pipeline is connected between the feed trough and the bottom of the alcohol channel; and the handle is arranged above the housing cover. The device according to this known solution is convenient to fill and makes it possible to remove chicken feathers clean, it has a simple structure and makes it possible to easily remove chickens from the inside of the container body.

Another solution known from Chinese utility model No. CN 204722145 relates to a continuous chicken feather cleaning device. The device screen comprises a base provided with two sets of vertical walls fixed to the base. Intervals between two sets of the vertical walls have been left. The interval makes that live chickens hanging on the frame pass between the walls, activate a switch in the form of a valve opening the gas container. The device is provided with a plurality of burning nozzles. According to this solution, a chicken body in the feather cleaning device is located in the nozzle area, wherein the position of each nozzle can be adjusted as required. When chicken bodies pass through the device, fine feathers are burnt rapidly. At the same time, the flame of the nozzles can be strengthened in the casing which increases the fine feather cleaning effect.

In a further solution known from the specification of Chinese utility model No. CN 2034467538, a known cleaning device used in poultry slaughterhouses is disclosed. The cleaning device contains a fixed frame and a roofed track of a running part. The running part comprises in the line body, a plurality of baskets and a plurality of cleaning grooves. Each basket contains a rail and a lower unloading base that are connected into a single, trough-type structure. The central trough is arranged in the second trough. The unloading of the inner trough consists in the fact that the lower frame comprises two movably connected unloading doors. The sides of the unloading doors are connected with the rail by means of bearings. The switch is arranged on the lower unloading frame and comprises a handle for pulling the bars attached to the unloading doors. The mechanisation of transport in the process of cleaning the whole chicken is achieved by moving the vehicles and the baskets. As the baskets have the openwork structure, the bath of whole chickens can be closely supervised. The problem that whole chickens are left in the cleaning grooves is also easily solved, and the intensity of staff work is also considerably reduced.

In another solution known from Chinese utility model No. CN 203353543, a cleaning and sterilisation device for chicken feet is disclosed. The device comprises a cleaning barrel for cleaning chicken feet. A matched slab bracket is mounted at the bottom of the cleaning barrel on a ceramic aerator. An ozone steriliser is capable of preparing cleaning water. In the cleaning barrel, an ozone pipe is further connected into ozone water. The sterilisation and cleaning device for chicken feet has the advantages that the structure is simple and the operation is convenient. Not only can the impurities, such as water, blood and oil stains of the chicken feet be cleaned, but also various microbial germs can be killed.

Some of the chicken feet that are transported from the slaughterhouse contain impurities in the form of black spots on the side of the foot which, in the course of breeding, contacts the ground in the chicken coop. It is presumed that these clearly visible black spots are the result of the influence of ammonia on the chicken foot's instep skin. However, ammonia is contained in chicken faeces, covering the chicken hoop, to which chicken feet are constantly exposed. It is assumed that the black colour of the bottom of chicken feet is the result of scalds caused by the ammonia contained in chicken faeces. These spots disqualify chicken feet as a food product. The object of the invention is to provide a device for the effective removal of these impurities without the use of chemicals to allow their further use for food purposes.

Another known solution for cleaning chicken feet is disclosed in patent specification No. US 8827775. According to this know solution, a conveyor moves poultry feet sequentially through the input zone, the cleaning zones and the output zone of the conveyor, holding the poultry feet in a cleaning position. A spray head is located in the cleaning zone for cleaning the poultry feet. The device according to this known solution comprises a frame defining an input zone, a cleaning zone and an output zone and a conveyor for moving poultry feet through subsequent zones. The conveyor is configured for holding the poultry feet in place during cleaning. The device comprises at least one rotary spray head in the cleaning zone, having an operating pressure in the range of about 11 MPa (1600 psi) tο about 22 MPa (3200 psi). The device further comprises a controller for controlling a speed of the conveyor and a pressure of the spray head. Each poultry foot is cleaned by the sprayed head for about 0.5 to about 1.5 seconds. According to this known solution, the cleaning zone may include more than one spray head. The conveyor, according to this known solution, may include a number of openings for receiving the poultry feet from above, wherein the spray head can clan the poultry feet from below. The device, according to this known solution, also comprises a number of racks for holding the poultry feet in place and transporting them on the conveyor through the subsequent zones. The device further comprises a containment conveyor holding the racks with the poultry feet in a cleaning position while being sprayed with a cleaning liquid from the nozzle. In the racks the poultry feet are held between grids through which the cleaning stream can clean the feet. The containment conveyor comprises an assembly for pivoting it upward at one end to expose the conveyor in the cleaning zone.

In the prior art solutions, poultry feet are cleaned in packs containing several units, with the packs being previously prepared by placing one or more feet in frames, with the frames holding the chicken feet in place can be conveyed through the individual zones of a single device on a single conveyor belt and a single frame pressing belt in the cleaning zone. The problem to be solved is to improve the capacity and smoothness of operation of the device by designing a solution where poultry feet will not need to be placed in special frames, but can be continuously fed to the cleaning zone, and where a failure of one cleaning line will not cause the entire device to stop working.

The object of the invention is to provide a new device for cleaning poultry feet, where the conveying unit, the pressing unit and the cleaning unit comprise a plurality of identical, separate sets combined into a single whole, but cleaning poultry feet arranged and transported to the cleaning zone in parallel rows, one after another, more or less densely in individual rows, depending on the current needs. This object has been achieved in the device, according to claim 1 and the subsequent claims.

According to the invention, a device for cleaning chicken feet comprises at least one conveying unit comprising an endless conveyor belt stretched between a motor-driven driving shaft and a tension roll. The conveyor belt moves over a support structure top, and then returns under the support structure top to the driving shaft. The device further comprises a pressing unit cooperating with the conveying unit. The pressing unit comprises an endless pressing mesh with a width corresponding to the width of the conveyor belt, stretched between a drive roller and at least one tension roller. Said pressing mesh moves over the drive roller and the tension roller in the same direction as the conveyor belt in the conveying unit. The device is provided with a cleaning liquid, pressure, rotating nozzle directed through the pressing mesh to the conveyor belt.

The device according to the invention is characterised in that the conveying unit comprises a plurality of parallel conveyor belts each of which has the form of interconnected, repeating plastic links. Each link of the conveyor belt comprises a central groove, and in the conveyor belt longitudinal groove formed in this manner, chicken feet are arranged with the bottom impure part of feet upwards. The device further comprises a plurality of parallel top modules of the pressing unit. In each module of the pressing unit, the tension rollers of the endless mesh are attached to a vertical supporting plate of the pressing unit module. The liquid pressure nozzle in each of the pressing unit modules is directed with its outlet through the pressing mesh belt towards the conveyor belt groove corresponding to the pressing unit module. The liquid pressure nozzles of each of the pressing unit modules are supplied from a common supply header.

According to the invention, the bottom conveying unit comprising a plurality of the conveyor belts moving in the same direction in parallel next to one another can be connected with the hinged upper pressing unit comprising the same number of modules with the pressing mesh belts.

The conveyor belts in the conveying unit are preferably driven from one common driving shaft of the conveying unit, and the modules with the pressing mesh belts in the pressing unit are preferably driven from one common driving shaft of the pressing unit.

In a preferred embodiment of the invention, the pressing mesh in the pressing unit module can be close-fitted to a sliding roller, with each pressing mesh in each pressing unit module being provided with its own set of additional tension rollers of the mesh.

According to the invention, the tension rollers of the pressing mesh belt are preferably mounted at the ends of arms the support axes of which can be mounted on the vertical supporting plate of each pressing unit module. To the opposite ends of the arms, springs are preferably attached fixed to pins mounted in the vertical supporting plate of the pressing unit module.

Said pins are preferably mounted in the vertical supporting plate of the pressing unit module in slots making it possible to change the position of the pins.

In a preferred embodiment of the invention, the conveyor belt in the conveying unit is made of individual pivotally connected links.

According to the invention, a new device for cleaning chicken feet has been developed, where the conveying unit, the pressing unit and the cleaning unit comprise a plurality of identical, separate sets combined into a single whole, but in principle working independently. Each of these parallel sets cleans chicken feet arranged and transported to the cleaning zone in a row, one after another, more or less densely in the row, depending on the current needs. A specific conveyor belt-pressing unit set may not be fully used at a given time, and grooves in the conveyor belts of other sets operating at the same time can be filled to a smaller or greater extent, depending on the needs. The design of the device has made it possible to increase the throughput and smoothness of operation by designing a solution where poultry feet do not need to be arranged in special frames, but are fed to parallel cleaning zones in individual sets operating continuously in parallel. As stated during the tests, in the device according to the invention, a failure of one of a number of conveyor belt-pressing unit sets does not cause the entire device to stop working and the other parallel sets can be used according to the current needs.

The object of the invention is shown in the embodiment in the accompanying drawings, in which the individual figures show:
- Fig. 1: - a perspective view of the device.

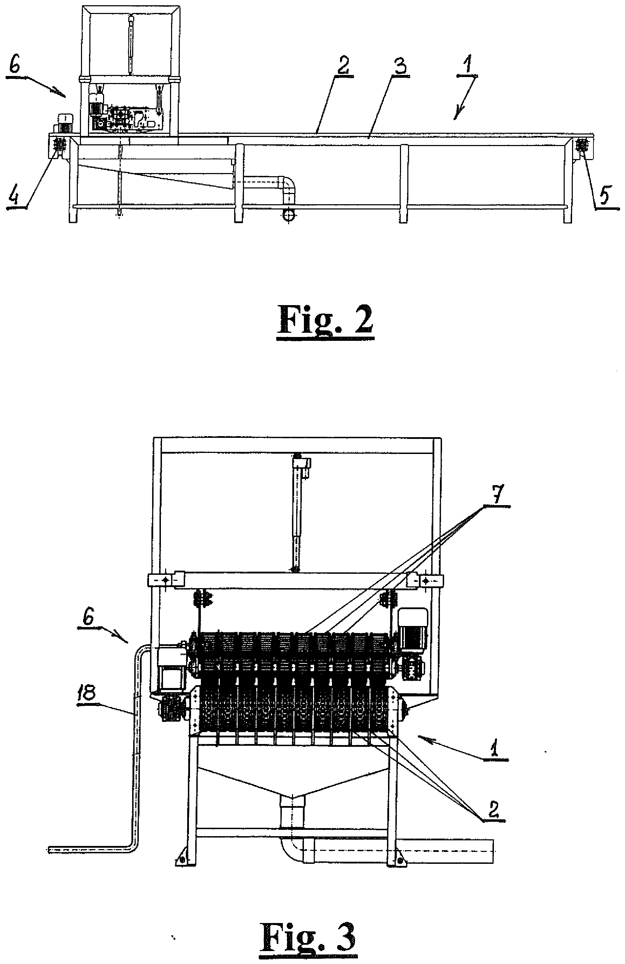

- Fig. 2: - a side view of the device.
- Fig. 3: - a view of the device at the outfeed of the chicken feet after cleaning.
- Fig. 4: - a side view of the pressing unit.
- Fig. 5: - a view of parallel conveyor belt- pressing unit sets.
- Fig. 6: - a side view of a portion of the conveyor belt.
- Fig. 7: - a view of a portion of the belt, according to Fig. 6, in line with the longitudinal axis of symmetry of the conveyor belt.
- Fig. 8: - a top view of the conveyor belt links connected by rotation axes.
- Fig. 9: - a view of three links of the conveyor belt prepared for connection.
- Fig. 10: - a side view of the pressing mesh.
- Fig. 11: - a top view of the pressing mesh.
- Fig. 12: - a view of the pressing mesh link.

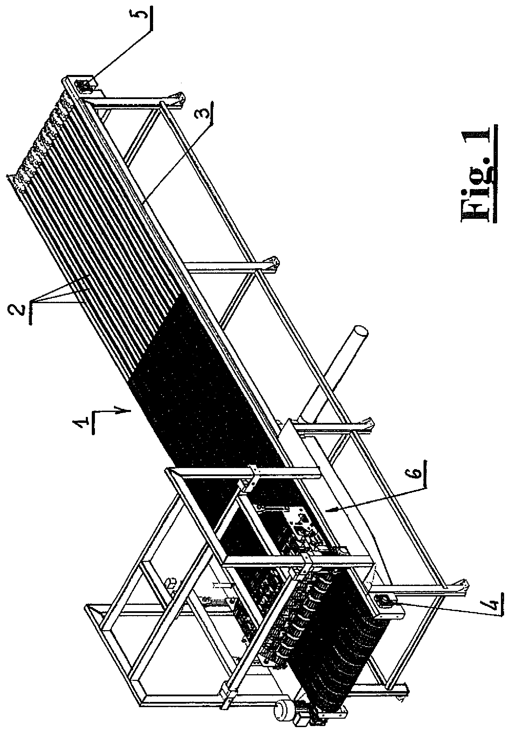

Fig. 1 shows in the embodiment a perspective view of a device for cleaning chicken feet. The device comprises, mounted on a support structure, a conveying unit 1 comprising a plurality of conveyor belts 2 moving in parallel. The endless conveyor belts 2 move over the support structure top 3, and then return under the support structure top 3. This figure shows that the conveying unit 1 in this embodiment comprises ten conveyor belts 2 moving in parallel to one another in the same direction.

The conveyor belts 2 are endless belts, stretched between a motor-driven driving shaft 4 and a tension roll 5. The conveyor belt 2 moves over the top 3 towards the driving shaft, and then returns under the support structure top 3 to the tension roll 5.

The device further comprises a pressing unit 6 cooperating with the conveying unit 1. The pressing unit 6 comprises the same number of identical modules with pressing mesh belts 7 as the number of the conveyor belts 2. The purpose of each pressing unit 6 module is to press a chicken foot against the conveyor belt 2 cooperating with this module and hold the chicken foot in place with its bottom part upwards. This is done as a result of the pressure of the mesh belt of the pressing unit 6 module. A cleaning liquid jet from a nozzle 10 flows through the mesh. In this embodiment, the cleaning liquid is water supplied under pressure from the nozzle 10, containing an internal rotary head. Each pressing unit 6 module comprises the endless pressing mesh belt 7. The width of the pressing mesh belt 7 corresponds to the width of the conveyor belt 2 stretched between the driving shaft 4 and the tension roll 5.

Said endless pressing mesh belt 7 moves on a drive roller 8 and a sliding roller 9 in the same direction as the conveyor belt 2 in the conveying unit 1. In other embodiments, the sliding roller 9 can be replaced by a tension roller. In this embodiment, the roller 9 is made in the form of a sliding roller on which the pressing mesh belt 7 slides.

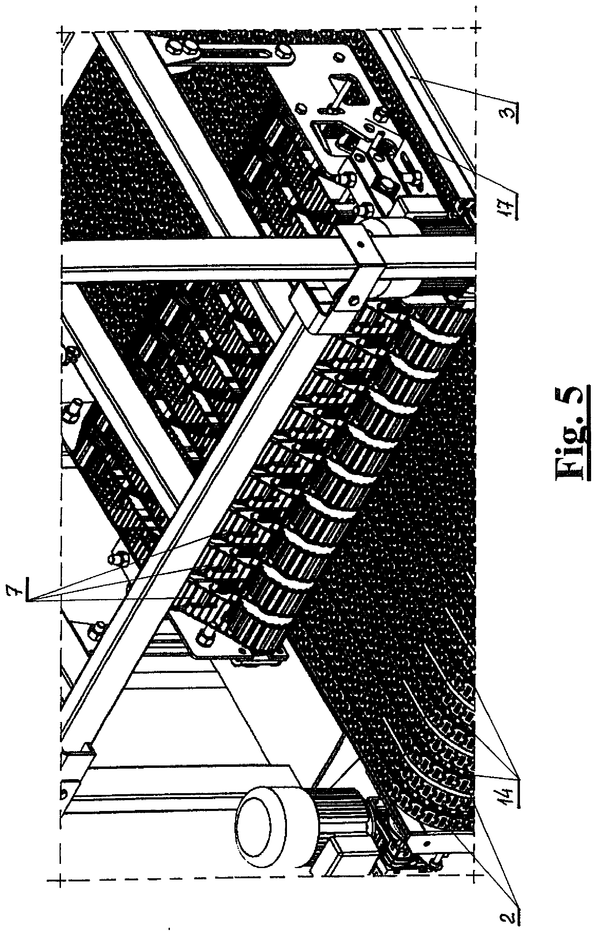

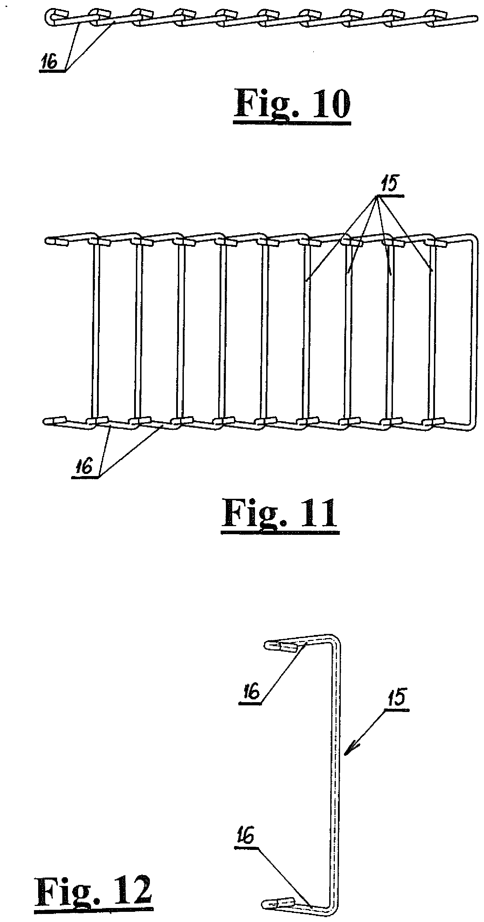

A portion of the pressing mesh belt 7 is shown in Fig. 5 as well as Fig. 10 and Fig. 11. The pressing mesh has the form of interconnected single links 15, transverse to the length of the belt 7, where each single link 15 is C-shaped. The link 15 in this embodiment is shown in Fig. 12. In this embodiment, the link 15 is made of stainless steel wire with a diameter of 2 mm, and the width of the pressing mesh belt 7 is 70 mm.

The ends of short arms 16 of each link 15 are loosely caught around the previous link 15 so that a plurality of the links 15 form a row of bars in the form of an endless belt, tiltingly connected to one another. The connection of the individual links 15 into one pressing mesh belt 7 is shown in Fig. 10, Fig. 11 and Fig. 5. With this structure, the pressing mesh belt 7 can be guided on rollers mounted to a vertical plate 17, which is a body of the single pressing unit 6 module. As has been experimentally proved, this form of mesh forming the pressing belt 7, after having released the pressure of the chicken foot on the conveyor belt 2 outside the cleaning zone, minimises the undesirable phenomenon of accidentally taking the cleaned chicken feet by the pressing mesh belt 7. The cleaned chicken foot should remain on the conveyor belt 2 and fall into a container under the reverse of the conveyor belt 2, on the driving shaft 4 under the support structure top 3. The proposed design of the pressing mesh belt 7 has made it possible to eliminate this unfavourable phenomenon of catching the chicken feet on the pressing mesh belt 7.

Each conveyor belt 2 unit with the corresponding pressing unit 6 module is provided with its own liquid pressure nozzle 10, with the liquid jet being directed through the pressing mesh 7 to the conveyor belt 2. In this embodiment, the cleaning liquid is water. In this embodiment, the conveying unit 1 comprises ten parallel conveyor belts 2, each of which has the form of a row of interconnected, repeating plastic links 11. One pressing unit 6 module described above cooperates with each conveyor belt 2.

The conveyor belt 2 links 11 made of polyethylene are connected by means of stainless steel pivots 12 put through holes 13 in the links. Therefore, the adjacent links 11 are pivotally connected and have one degree of freedom. Thus, the conveyor belt 2 can freely run around the drive roller 8 and the sliding roller 9. In this embodiment, the links 11 have a width of 83 mm, which, as has been found, is sufficient for arranging on the conveyor belt 2 chicken feet for cleaning.

Each conveyor belt 2 link 11 described above comprises a central groove 14, and in the conveyor belt 2 longitudinal groove 14 formed from the connected links 11, chicken feet are arranged with the bottom part of feet to be cleaned upwards. The chicken feet are arranged on the described conveyor belts 2 sequentially in rows by the device operators, with the number of conveyor belts 2 operating in parallel being used, depending on the raw material needs at a given moment.

As mentioned above, in this embodiment, the device comprises a plurality of parallel pressing unit 6 modules. These identical modules are connected into one upper pressing unit 6 composed of the same combined modules. Each pressing unit 6 module, in this embodiment, is a separate segment handling one conveyor belt 2. In this embodiment, where the device comprises 10 conveyor belts, the upper pressing unit 6 comprises ten identical pressing modules. Each pressing unit 6 module, by its pressing mesh belt 7 cooperates with the corresponding conveyor belt 2, pressing by means of said mesh belt 7 the chicken feet arranged in the central groove 14 of the conveyor belt 2. In this manner, the chicken feet are held in place for the time of water jet cleaning, with the bottom part of their feet upwards, as arranged in the groove 14 by the device operators. The chicken feet held in place in this manner, after having passed under the nozzle 10 outlet, leave the zone in which the pressing mesh belt 7 adheres to the conveyor belt 2, and cleaned fall into the finished product container.

The operation of cleaning chicken feet proceeds as described, in this embodiment, on ten parallel lines, where, as already described above, each line comprises one endless conveyor belt 2 and cooperating with the conveyor belt 2 one pressing unit 6 module with one endless pressing mesh belt 7. In this patent specification, the term pressing unit 6 means ten identical modules connected into a single unit.

In this embodiment, ten conveyor belts 2 are driven by the common driving shaft 4, while ten cooperating pressing mesh belts 7 are driven from the common drive roller 8. Therefore, the device, in this embodiment, comprises ten conveyor belt 2- pressing mesh belt 7 sets and cleans chicken feet at the same time in ten rows. In other embodiments, the number of the conveyor belt 2- the pressing unit module sets can be different. The task of the device operators is to arrange chicken feet in the groove 14 of each conveyor belt 2 in the quantities according to the raw material supply. After each chicken foot has been arranged in the groove 14 with the bottom part of the foot upwards, the subsequent phase of the process proceeds automatically, from holding the chicken foot in place between the conveyor belt 2 and the pressing mesh belt 7, through the phase of cleaning with a water jet from the nozzle 10, to the phase of releasing the cleaned chicken foot from between both belts 2,7 and dropping it to the finished product bulk container.

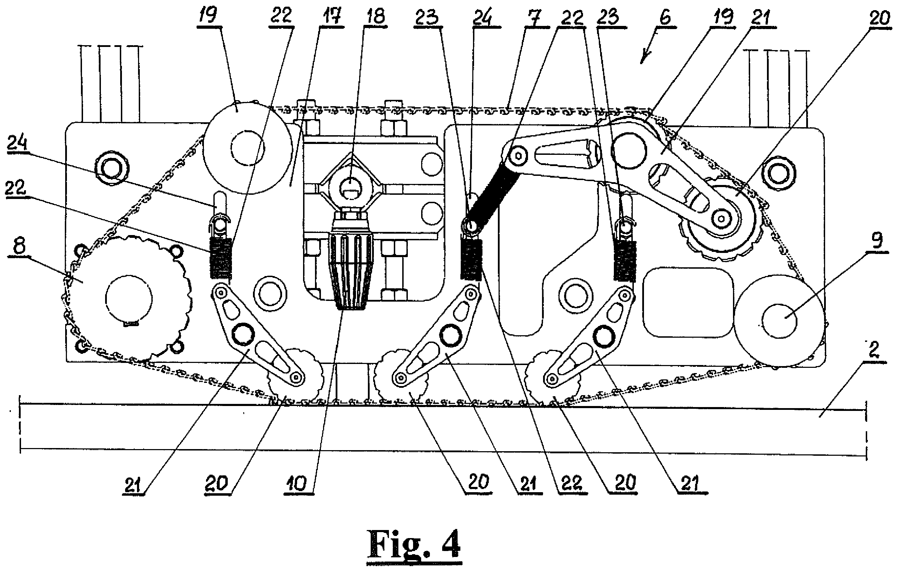

Fig. 4 shows in detail the embodiment of the pressing unit 6 module. The pressing unit 6 module is a body in the form of a vertical supporting plate 17. The nozzle 10 supplied with water from a header 18 is attached to the plate 17. The water pressure nozzle 10 in each of the pressing unit 6 modules is directed with its outlet through the pressing mesh belt 7 towards the conveyor belt 2 groove 14 corresponding to the module. The pressure nozzles 10 in each pressing unit 6 module are supplied from the common supply header 18, on which they are also mounted. As shown in Fig. 4, the pressing mesh belt 7 in the pressing unit 6 module is close-fitted to the drive roller 8 and the sliding roller 9. The pressing mesh belt 7 in each pressing unit 6 module is provided in this embodiment with a set of additional tension rollers. In this embodiment, two fixed rollers 19 and four tension rollers 20 are used.

As shown in Fig. 4, the tension rollers 20 of the pressing mesh belt 7 are mounted at the ends of arms 21, the support axes of which are mounted on the vertical supporting plate 17. At one end of the arms said tension rollers 20 are mounted, and to the opposite ends of the arms 21, in this embodiment, springs 22 are mounted attached to pins 23 mounted in the vertical supporting plate 17 of the pressing unit 6 module.

Said pins 23 are mounted in the vertical supporting plate 17 of the pressing unit 6 module in slots 24 making it possible to change the position of the pins 23. Changing the mounting position of the pins 23 in the slots 24 increases or decreases the force of the spring 22 applied to the cooperating tension roller 20.

According to the invention, the conveying unit 1 comprises a plurality of conveyor belts 2 moving in the same direction in parallel next to one another. The conveying unit 1 cooperates with the hinged upper pressing unit 6 containing the same number of pressing modules with the pressing mesh belts 7.

The conveyor belts 2 in the conveying unit 1 are driven in this embodiment from one common driving shaft 4, and the pressing mesh belts 7 in the pressing unit 6 modules are driven from one common drive roller 8 of the pressing unit 6.

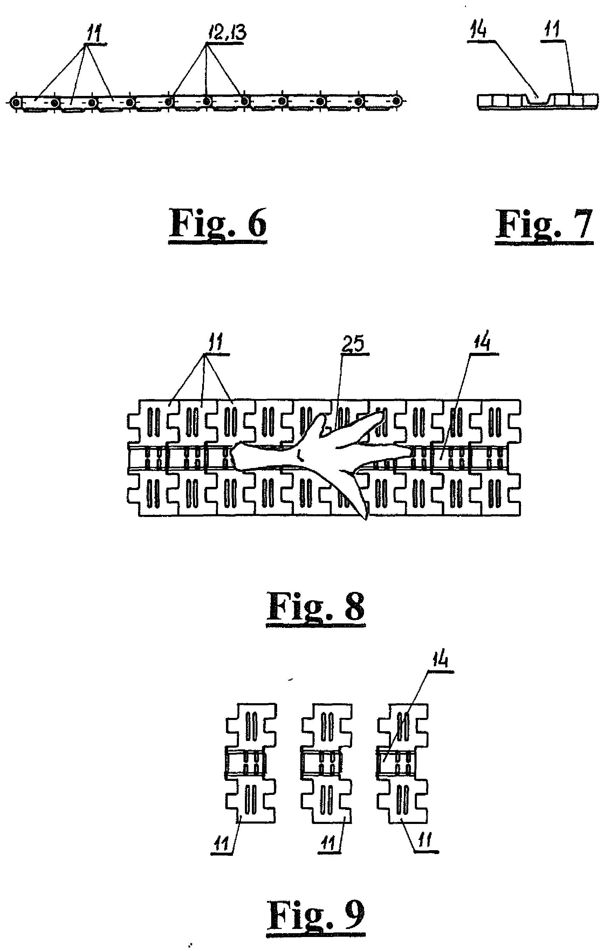

As shown in Fig. 6 and Fig. 8, the conveyor belt 2 in the conveying unit 1 is made in this embodiment of individual links 11 pivotally connected by means of a stainless steel pivot 12. Fig. 7 shows a view of the single link 11 in the direction in line with the longitudinal axis of symmetry of the conveyor belt 2. As shown in the figure, in the central portion of the link 11 the central groove 14 is provided. After having connected the individual links into a working system, as shown in the example in Fig. 8, the central grooves 14 of the individual links 11 are arranged in one longitudinal groove extending along the entire conveyor belt 2. Chicken feet 25 are arranged in the groove for cleaning. However, Fig. 9 shows three links 11 of the conveyor belt 2, exploded, before being connected with their pivots 12.

### List of designations in the figures

1. Conveying unit.
2. Conveyor belt.
3. Support structure top.
4. Driving shaft.
5. Tension roll.
6. Pressing unit.
7. Pressing mesh belt.
8. Drive roller.
9. Sliding roller.
10. Nozzle.
11.Link.
12.Pivot.
13.Hole.
14. Central groove.
15.Pressing mesh link.
16.Link arm.
17.Supporting plate.
18.Supply header.
19.Fixed roller.
20.Tension roller.
21.Arm.
22.Spring.
23.Pin.
24.Slot.
25.Chicken foot.

## Claims

1. A device for cleaning chicken feet comprising a bottom conveying unit (1) comprising an endless conveyor belt (2) stretched between a motor-driven driving shaft (4) and a tension roll (5), wherein the conveyor belt (2) moves over a support structure top (3), and then returns under the support structure top (3), and comprising a pressing unit (6) cooperating with the conveying unit (1), wherein the pressing unit (6) comprises an endless pressing mesh belt (7) with a width corresponding to the width of the conveyor belt (2) stretched between a drive roller (8) and at least one sliding roller (9), where the pressing mesh belt (7) moves in the same direction as the conveyor belt (2), wherein the device is provided with a cleaning liquid, pressure, rotating nozzle (10) directed through the pressing mesh belt (7) to the conveyor belt (2) and comprises a wastewater system, **characterised in that,** the conveying unit (1) comprises a plurality of parallel conveyor belts (2) of which each has the form of interconnected, repeating plastic links (11), where each link (11) of the conveyor belt (2) comprises a central groove (14), and in the conveyor belt (2) longitudinal central groove (14) formed from the connected links (11), and the device comprises a plurality of parallel modules of the top pressing unit (6), wherein in each module of the pressing unit (6), tension rollers (20) of the endless pressing mesh belt (7) are attached to a vertical supporting plate (17) of the pressing unit (6) module, and the liquid pressure nozzle (10) in each of the pressing unit (6) modules is directed with its outlet through the pressing mesh belt (6) towards the conveyor belt (2) groove (14) corresponding to the pressing unit (6) module, wherein the pressure nozzles (10) of each of the pressing unit (6) modules are supplied from a common supply header (18).

2. The device, according to claim 1, **characterised in that,** the bottom conveying unit (1) comprising a plurality of the conveyor belts (2) moving in the same direction in parallel next to one another is connected with the hinged upper pressing unit (6) comprising the number of modules corresponding to the number of the conveyor belts (2).

3. The device, according to claim 1 or 2, **characterised in that,** the conveyor belts (2) in the conveying unit (1) are driven from one common driving shaft (4), and the pressing mesh belts (7) in the pressing unit (6) are driven from one common drive roller (8).

4. The device, according to claim 3, **characterised in that,** the pressing mesh belt (7) in the pressing unit (6) module is close-fitted to a sliding roller (9), wherein each pressing mesh belt (7) is provided with its own set of tension rollers (20) of the mesh belt (7).

5. The device, according to claim 4, **characterised in that,** the tension rollers (20) of the pressing mesh belt (7) are mounted at the ends of arms (21) the support axes of which are mounted on the vertical supporting plate (17) of each pressing unit (6) module, and to the opposite end of the arms (21), springs (22) are attached fixed to pins (23) mounted in the vertical supporting plate (17).

6. The device, according to claim 5, **characterised in that,** the pins (23) are mounted in the vertical supporting plate (17) of the pressing unit (6) module in slots (24) making it possible to change the position of the pins (23).

7. The device, according to claim 3, **characterised in that,** the conveyor belt (2) in the conveying unit (1) is made of individual, pivotally connected links (11) by means of pivots (12).

## Patentansprüche

1. Vorrichtung zur Reinigung von Geflügelfüssen, bestehend aus der unteren Fördereinheit (1), die das zwischen der Antriebswelle (4) mit Motorantrieb und der Spannrolle (5) gespannte endlose Förderband (2) enthält, wobei das Förderband (2) über die Oberseite der Tragkonstruktion (3) gleitet und dann unter die Oberseite dieser Tragkonstruktion (3) zurückkehrt, und aus der mit der Fördereinheit (1) zusammenarbeitenden Klemmeinheit (6), wobei die Klemmeinheit (6) ein endloses Druckgitterband (7) mit einer Breite enthält, die der Breite des Förderbandes (2) entspricht, das sich zwischen der Antriebsrolle (8) und mindestens einer Gleitrolle (9) erstreckt, wobei sich das Druckgitterband (7) in der gleichen Richtung wie das Förderband (2) bewegt und mit einer Druckrotationsdüse (10) für Reinigungsflüssigkeit ausgestattet ist, die durch das Druckgitterband (7) auf das Förderband (2) gerichtet ist, und ein Abwasserabflusssystem enthält, **dadurch gekennzeichnet, dass** die Fördereinheit (1) eine Reihe von parallelen Förderbändern (2) enthält, von denen jedes die Form von miteinander verbundenen, sich wiederholenden Kunststoffkettengliedern (11) hat, wobei jedes Kettenglied (11) des Transportbandes (2) eine zentrale Rille (14) enthält und in der so entstandenen zentralen Längsrille (14) des Förderbandes (2) und die Vorrichtung eine Reihe von parallelen Modulen der oberen Klemmeinheit (6) enthält, wobei in jeder Klemmeinheit (6) die Spannrollen (20) des endlosen Druckgitterbandes (7) an der vertikalen Trägerplatte (17) dieser Klemmeinheit (6) befestigt sind, und die Druckrotationsdüse (10) des Fluids in jeder der Klemmeinheiten (6) den Auslass über das Druckgitterband (6) in Richtung des entsprechenden Klemmeinheitmoduls (6) auf die Längsrille (14) des Förderbandes (2) richtet, wobei die Druckrotationsdüsen (10) jedes Klemmeinheitmoduls (6) von einem gemeinsamen Versorgungsverteiler (18) versorgt werden.

2. Vorrichtung nach Anspruch 1, **dadurch gekennzeichnet, dass** die untere Fördereinheit (1), die eine Reihe von Förderbändern (2) enthält, die sich in der gleichen Richtung parallel nebeneinander bewegen, mit einer schwenkbaren oberen Klemmeinheit (6) verbunden ist, die die der Anzahl der Förderbänder (2) entsprechende Anzahl von Modulen enthält.

3. Vorrichtung nach Anspruch 1 oder 2, **dadurch gekennzeichnet, dass** die Förderbänder (2) in der Fördereinheit (1) von einer gemeinsamen Antriebsrolle (4) angetrieben werden, während die Druckgitterbänder (7) in der Klemmeinheit (6) von einer gemeinsamen Antriebsrolle (8) angetrieben werden.

4. Vorrichtung nach Anspruch 3, **dadurch gekennzeichnet, dass** das Druckgitterband (7) im Klemmeinheitsmodul (6) auf einer Gleitrolle (9) montiert ist, wobei jedes Druckgitterband (7) mit einer eigenen Spannrolleneinheit (20) dieses Druckgitterbandes (7) ausgestattet ist.

5. Vorrichtung nach Anspruch 4, **dadurch gekennzeichnet, dass** die Spannrollen (20) des Druckgitterbandes (7) an den Enden der Hebel (21) angeordnet sind, deren Tragachsen auf der vertikalen Tragplatte (17) jedes Klemmeinheitsmoduls (6) angebracht sind, während an den entgegengesetzten Enden dieser Hebel (21) Federn (22) montiert sind, die an Stiften (23) befestigt sind, die in diese vertikale Tragplatte (17) eingelassen sind.

6. Vorrichtung nach Anspruch 5, **dadurch gekennzeichnet, dass** die Stifte (23) in der vertikalen Trägerplatte (17) des Klemmeinheitsmoduls (6) in Schlitzen (24) befestigt sind, die es ermöglichen, die Position dieser Stifte (23) zu ändern.

7. Vorrichtung nach Anspruch 3, **dadurch gekennzeichnet, dass** das Förderband (2) in der Fördereinheit (1) aus einzelnen Gliedern (11) besteht, die durch Achsen (12) gelenkig miteinander verbunden sind.

## Revendications

1. Dispositif de nettoyage de pattes de volaille comprenant une unité de transport inférieure (1), comprenant un convoyeur (2) sans fin tendu entre un arbre d'entraînement (4) entraîné par moteur et un rouleau de tension (5), et le convoyeur (2) se déplace sur le dessus d'une structure de support (3), et ensuite retourne sous le dessus de la structure de support (3), et comprenant une unité de pressage (6) coopréant avec l'unité de transport (1), et l'unité de pressage (6) comprend un courroie de mesh de pressage (7) sans fin d'une largeur correspondant à la largeur du convoyeur (2) tendu entre un rouleau d'entraînement (8) et au moins un rouleau coulissant (9), où le courroie de mesh de pressage (7) se déplace dans la même direction que le convoyeur (2), et le dispositif est équipé d'une buse de pression rotative (10) de liquide de nettoyage, dirigée à travers le courroie de mesh de pressage (7) vers le convoyeur (2) et comprend un système d'égouts, **caractérisé en ce que** l'unité de transport (1) comprend un rang de convoyeurs parallèles (2) dont chacun a une forme de liens répétitifs interconnectés (11) de plastique où chaque lien (11) du convoyeur (2) comprend une rainure centrale (14) et dans ainsi formée de liens interconnectés (11) la rainure centrale longitudinale (14) du convoyeur (2) et le dispositif comprend un rang de modules parallèles de l'unité de pressage supérieure (6), et dans chaque module de l'unité de pressage (6) les rouleaux de tension (20) du courroie de mesh de pressage (7) sans fin sont attachés à une plaque de support verticale (17) de ce module de l'unité de pressage (6), et la buse de pression (10) de liquide dans chaque module de l'unité de pressage (6) est dirigée avec sa sortie à travers du courroie de mesh de pressage (6) dans la direction de la rainure (14) du convoyeur (2) correspondant à ce module de l'unité de pressage (6), et les buses de pression (10) de chaque module de l'unité de pressage (6) sont alimentées d'un collecteur d'alimentation commun (18).

2. Dispositif selon la revendication 1, **caractérisé en ce que** l'unité de transport inférieure (1) comprenant un rang de convoyeurs (2) se déplaçant dans la même direction parallèlement l'un à côté de l'autre, est connectée à l'unité de pressage supérieure articulée (6) comprenant un nombre de modules correspondant au nombre de convoyeurs (2).

3. Dispositif selon la revendication 1 ou 2, **caractérisé en ce que** les convoyeurs (2) dans l'unité de transport (1) sont entraînés d'un arbre d'entraînement commun (4), et les courroies de mesh de pressage (7) dans l'unité de pressage (6) sont entraînés d'un rouleau d'entraînement commun (8).

4. Dispositif selon la revendication 3, **caractérisé en ce que** le courroie de mesh de pressage (7) dans le module de l'unité de pressage (6) est enroulé au rouleau coulissant (9) et chaque courroie de mesh de pressage (7) est équipé de son propre groupe de rouleaux de tension (20) de ce courroie de mesh (7).

5. Dispositif selon la revendication 4, **caractérisé en ce que** les rouleaux de tension (20) du courroie de mesh de pressage (7) sont montés aux extrémités de leviers (21), dont les axes de support sont montés à la plaque de support verticale (17) de chaque module de l'unité de pressage (6), et aux extrémités opposées de ces leviers (21) sont montés des ressorts (22), montés aux goupilles (23) encastrées à la plaque de support verticale (17).

6. Dispositif selon la revendication 5, **caractérisé en ce que** les goupilles (23) sont montées à la plaque de support verticale (17) du module de l'unité de pressage (6) dans les fentes (24) permettant le changement de la position de ces goupilles (23).

7. Dispositif selon la revendication 3, **caractérisé en ce que** le convoyeur (2) dans l'unité de transport (1) est construit de liens individuels (11), articulés entre eux par des axes (12).
